# EUROPÄISCHE PATENTSCHRIFT

(11) **EP 3 276 897 B1**
(45) Veröffentlichungstag und Bekanntmachung des Hinweises auf die Patenterteilung: **27.01.2021**
(21) Anmeldenummer: 16180967.8
(22) Anmeldetag: 25.07.2016
(51) Int. Cl.: H04L 12/911, H04L 12/927, H04L 12/803, H04L 12/841, H04L 29/08

(54) **LASTVERTEILUNG IN EINEM KOMMUNIKATIONSNETZWERK**
LOAD SHARING WITHIN A COMMUNICATION NETWORK
RÉPARTITION DE CHARGE DANS UN RÉSEAU DE COMMUNICATION

(43) Veröffentlichungstag der Anmeldung: 31.01.2018
(73) Patentinhaber: Deutsche Telekom AG, 53113 Bonn (DE)
(72) Erfinder: WANG, Hao, 53175 Bonn (DE)
(74) Vertreter: Braun-Dullaeus Pannen Emmerling Patent- & Rechtsanwaltspartnerschaft mbB

(56) Entgegenhaltungen:
- EP-A1- 2 827 561
- EP-A1- 3 037 965
- US-A1- 2006 167 729
- US-A1- 2016 212 063

## Beschreibung

Die vorliegende Erfindung betrifft ein Verfahren zur Lastverteilung zwischen einem Server und einem Endgerät, insbesondere einem Smartphone oder einem anderen mobilen Gerät, wobei der Server über ein Kommunikationsnetzwerk, insbesondere das Internet, Daten mit dem Endgerät austauscht, wobei eine Lastverteilungseinheit den Datenverkehr zwischen dem Server und dem Endgerät kontrolliert und wobei das Endgerät zu einem bestimmten Zeitpunkt einen Lastprozess, wie das Herunterladen von Daten im Rahmen eines Download oder das Erbringen einer Rechenleistung, bei dem Server anfragt. Hierbei tauscht der Server über ein Kommunikationsnetzwerk, insbesondere das Internet, Daten mit dem Endgerät aus. Eine Lastverteilungseinheit kontrolliert einen Datenverkehr zwischen dem Server und dem Endgerät.

DE 10 2013 200 187 A1 beschreibt ein Verfahren zur Lastverteilung in einem drahtlosen, lokalen Netzwerk mit mehreren Zugangspunkten und einem zentralen Server. Auf einem Endgerät kann ein Benutzer eine Anwendung starten, wobei sich die Anwendung über einen der Zugangspunkte mit dem Netzwerk verbindet und Daten für die Anwendung, beispielsweise multimediale Informationsinhalte, von dem Server bezieht. Hierbei werden von der Anwendung mehrere Zugangspunkte zugleich gescannt und Verfügbarkeitsinformationen an den zentralen Server gesendet. Auf Basis der Verfügbarkeitsinformationen wird der Zugangspunkt für das Endgerät ausgewählt, der die besten Betriebseigenschaften aufweist.

DE 10 2010 043 783 A1 beschreibt ein Verfahren und eine Lastverteilungseinheit bei einer Verarbeitung von 3D-Bilddaten zwischen mindestens einem Endgerät und mindestens einem Server eines Netzwerks. Hierbei wird die 3D-Verarbeitung derart adaptiert, dass eine Ausführbarkeit, in Abhängigkeit der verfügbaren Netzwerkbandbreite, auf dem Server- und/oder auf dem Endgerät möglich ist.

Die EP 2 827 561 A1 offenbart ein Verfahren, bei dem der Lastausgleich dadurch bewerkstelligt wird, dass das Endgerät seine Anfrage in kurzen Abständen mehrfach wiederholt. Die EP 3 037 965 A1 offenbart ein ähnliches Verfahren .

Der Erfindung liegt daher die Aufgabe zugrunde, ein Verfahren und ein Datenverkehr-Kontrollsystem zur Lastverteilung zwischen einem Server und einem Endgerät in einem Kommunikationsnetzwerk anzugeben, durch welche auf einfache Weise eine Nutzung der verfügbaren Ressourcen im Kommunikationsnetzwerk ermöglicht wird und einem Systemausfall durch Überlastung des Servers oder des Kommunikationsnetzwerks vorgebeugt wird. Diese Aufgabe wird durch ein Verfahren mit den Merkmalen des unabhängigen Patentanspruchs 1 und ein Datenverkehr-Kontrollsystem mit den Merkmalen des unabhängigen Patentanspruchs 8 gelöst. Vorteilhafte Ausführungsformen der vorliegenden Erfindung sind in den abhängigen Ansprüchen beschrieben.

Der bei dem erfindungsgemäßen Verfahren realisierte Kerngedanke liegt darin, dass das Endgerät einen Lastprozess insbesondere einen Datendownload, der seitens des Servers über das Kommunikationsnetzwerk bearbeitet wird, zu einem bestimmten Zeitpunkt innerhalb eines Zeitfensters anfragt. Die Lastverteilungseinheit antwortet dem Endgerät durch Übermittlung einer Informationsnachricht, dass es die Anfrage innerhalb eines späteren Zeitfensters wiederholen soll. Daraufhin wiederholt das Endgerät seine Anfrage in dem späteren Zeitfenster. Für diese Kontrolle wird die Auslastung des Servers und die des Kommunikationsnetzwerks berücksichtigt. Die hierfür benötigten Daten werden der Lastverteilungseinheit zur Verfügung gestellt. Die Lastverteilung verhindert, dass es zu Systemausfällen durch Überlastung einzelner Komponenten kommt.

Hierbei bezeichnet der Ausdruck Lastprozess eine Gesamtheit an typischen Aufgaben, die über das Kommunikationsnetzwerk an den Server gesendet werden. Diese Aufgaben umfassen Medieninhalte zu übertragen oder Rechenleistungen zu erbringen. Die Lastprozesse werden von den Endgeräten angefragt und über das Kommunikationsnetzwerk gesendet. Der Lastverteilungseinheit werden Daten bezüglich Ressourcenauslastung des Kommunikationsnetzwerks und des Servers bereitgestellt. Diese Daten werden von der Lastverteilungseinheit analysiert. Aufgrund dieser Analyse ermittelt die Lastverteilungseinheit, dass die Anfrage des Lastprozesses durch das Endgerät zu einer Überlastung des Servers und/oder des Kommunikationsnetzwerks führen könnte, sodass die Lastverteilungseinheit eine zeitliche Entzerrung der Lastprozessor bewerkstelligt, indem dem Endgerät mitgeteilt wird, die Anfrage für den Lastprozess auf ein weiteres, in der Zukunft liegendes, Zeitfenster zu verschieben. In diesem weiteren Zeitfenster fragt das Endgerät den Lastprozess erneut an, wobei der Lastprozess ausgeführt wird, wenn die Lastverteilungseinheit diesbezüglich eine Freigabe erteilt. In dem weiteren Zeitfenster werden Ressourcen für den Lastprozess freigehalten, sodass die Anfrage nicht erneut in ein dahinterliegendes Zeitfenster verschoben werden muss.

In vorteilhafter Weise sendet das Endgerät mittels der Anfrage des Lastprozesses zusätzliche Parameter an den Server, wobei die zusätzlichen Parameter Geräte- und Modelltypen Daten, Service-Kategorie und Service-ID Daten, Geräte-ID und Benutzer-ID Daten oder geographische Daten umfassen. Hierdurch wird ermöglicht, dass der Lastverteilungseinheit Entscheidungsgrundlagen bezüglich der Verschiebung der einzelnen Lastprozesse bereitgestellt werden. Typischerweise werden in einem kurzen Zeitraum eine Mehrzahl von Lastprozessen angefragt, welche von der Lastverteilungseinheit entweder zur sofortigen Abarbeitung freigegeben oder in weitere Zeitfenster verschoben werden. Mittels der Geräte- und Modelltypen Daten können die Lastprozesse bestimmter Hersteller bevorzugt bearbeitet werden, falls diese beispielsweise entsprechende Verträge mit Betreibern des Kommunikationsnetzwerks abgeschlossen haben. Ähnliches gilt auch für die Service-Kategorie und Service-ID Daten bzw. Geräte-ID und Benutzer-ID Daten, welche eine Grundlage zu einer Hierarchisierung der Lastprozesse darstellen. Sind der Lastverteilungseinheit Service-IDs von Notfallereignissen bekannt, werden diese bei einer Anfrage sofort bearbeitet, wohingegen ein Updateprozess für das Endgerät auf einen späteren Zeitpunkt verschoben wird. Bevorzugt werden die zusätzlichen Parameter der Lastverteilungseinheit zusammen mit Betriebsdaten des Servers, wie einer CPU-Auslastung oder einer zeitlichen Breitbandausnutzung, zur Verschiebung des angefragten Lastprozesses durch das Endgerät in das spätere Zeitfenster berücksichtigt.

Auf diese Weise wird sichergestellt, dass die durch den Benutzer angeforderten Lastprozesse nicht in Zeitfenster verschoben werden, die unnötig weit in der Zukunft liegen. Ist der Lastverteilungseinheit bekannt, wie stark der angefragte Lastprozess die Ressourcen belastet, wird ein Optimierungsalgorithmus gestartet, welcher die einzelnen Lastprozesse zeitlich so hintereinander anordnet, dass eine möglichst schnelle Abarbeitung der Lastprozesse unter gleichzeitigem Ausschluss einer Systemüberlastung verwirklicht ist.

Vorteilhaft wird eine Entscheidung über das Verschieben der Anfrage in das spätere Zeitfenster durch einen vorab definierten Computeralgorithmus oder durch einen Systemadministrator getroffen. Um dies zu bewerkstelligen, kommunizieren sowohl der Systemadministrator als auch der Computeralgorithmus mit der Lastverteilungseinheit, wobei insbesondere der Computeralgorithmus als ein Bestandteil der Lastverteilungseinheit ausgebildet ist. Der Computeralgorithmus ist bestens für die routinemäßigen Aufgaben der Lastverteilungseinheit geeignet, wobei der System Administrator flexibel auf unvorhergesehene Ereignisse reagieren kann.

Bevorzugt weist das Zeitfenster flexible Zeitintervalle auf, die beispielsweise einen Tag, 1 Stunde, 15 Minuten, 5 Minuten oder 1 Minute betragen. Die Flexibilität der Zeitintervalle ermöglicht zum einen, dass die erneute Anfrage nicht unnötig lange in die Zukunft geschoben wird und zugleich, dass das Endgerät den Lastprozess nicht unnötig oft anfragen muss. Hat die Lastverteilungseinheit festgestellt, dass die Ressourcen in der nächsten Stunde ausgelastet sind, hätte ein Zeitfenster von 1 Minute zur Folge, dass ein Endgerät seinen Lastprozess mindestens 60-mal anfragen würde, bevor dieser bearbeitet wird.

Vorteilhaft wird eine Gesamtlast der Lastprozesse gleichförmig über die Zeit verteilt. Dies gewährleistet eine optimale Ausnutzung der Ressourcen, da ein gleichförmiger Verlauf der Gesamtlast der Lastprozesse möglichst nah an eine Schwelle bezüglich einer Maximalbelastung des Kommunikationsnetzwerks und/oder des Servers anpassbar ist.

In einer vorteilhaften Ausgestaltung der Erfindung umfasst der Server die Lastverteilungseinheit. Auf diese Weise sind der Lastverteilungseinheit Daten zur CPU-Nutzung oder zur Breitbandauslastung besonders effektiv bereitgestellt.

Bevorzugt wird der Datenverkehr in verschiedenen Stufen kontrolliert. Hierdurch wird der Lastverteilungseinheit ermöglicht eine Verschiebung der Lastprozesse zu optimieren. So kann eine erste Stufe, welche zu einer größeren zeitlichen Entzerrung der Lastprozesse führt in einem Zeitraum Verwendung finden in dem typischerweise eine hohe Auslastung der Ressourcen stattfindet. Eine weitere Stufe, welche zu einer kleineren zeitlichen Entzerrung der Lastprozesse führt, findet in einem Zeitraum geringere Auslastung der Ressourcen Verwendung. Die Anzahl der Stufen ist hierbei frei wählbar und kann den Umständen entsprechend angepasst werden.

Vorteilhaft generiert die Lastverteilungseinheit einen Zeitplan, um den Datenverkehr zu optimieren. Dieser Zeitplan wird mittels eines Computeralgorithmuses von der Lastverteilungseinheit erzeugt, analysiert und dynamisch angepasst, sodass eine optimale Verteilung der Lastprozesse bereitgestellt werden kann. Der Zeitplan umfasst hierbei Informationen der einzelnen Lastprozesse wie beispielsweise CPU-Auslastung und Breitbandnutzung, sodass ein Optimierungsalgorithmus mit den Daten des Zeitplans ausführbar ist.

Gemäß einem Aspekt der Erfindung wird ein Datenverkehr-Kontrollsystem angegeben, wobei das Datenverkehr-Kontrollsystem einen Server mit einer Lastverteilungseinheit und einem Endgerät umfasst, wobei der Server und das Endgerät über ein Kommunikationsnetzwerk verbunden sind, um das vorstehend beschriebene erfindungsgemäße Verfahren auszuführen. Das Datenverkehr-Kontrollsystem ist zur Steuerung von Lastprozessen sowohl in einem Heimnetzwerk als auch in Kommunikationsnetzwerken von Mobilfunkanbietern implementierbar und stellt eine optimierte Nutzung der verfügbaren Ressourcen bereit.

Weitere Vorteile, Eigenschaften und Weiterbildung der Erfindung ergeben sich aus den abhängigen Ansprüchen sowie aus der nachstehenden Beschreibung eines bevorzugten Ausführungsbeispiels.

Nachfolgend wird die Erfindung anhand der Figuren 1 bis 5 näher erklärt. Es zeigen
- **Figur 1**: ein Kommunikationsnetzwerk mit einer Lastverteilungseinheit, die einen Datenfluss steuert,
- **Figur 2:**: eine erste Ausgestaltungsmöglichkeit der Steuerung des Datenflusses durch die Lastverteilungseinheit aus Figur 1,
- **Figur 3:**: eine zweite Ausgestaltungsmöglichkeit der Steuerung des Datenflusses durch die Lastverteilungseinheit aus Figur 1,
- **Figur 4:**: einen ersten Zeitplan für die Verarbeitung von Lastprozessen,
- **Figur 5:**: einen zweiten Zeitplan für die Verarbeitung von Lastprozessen.

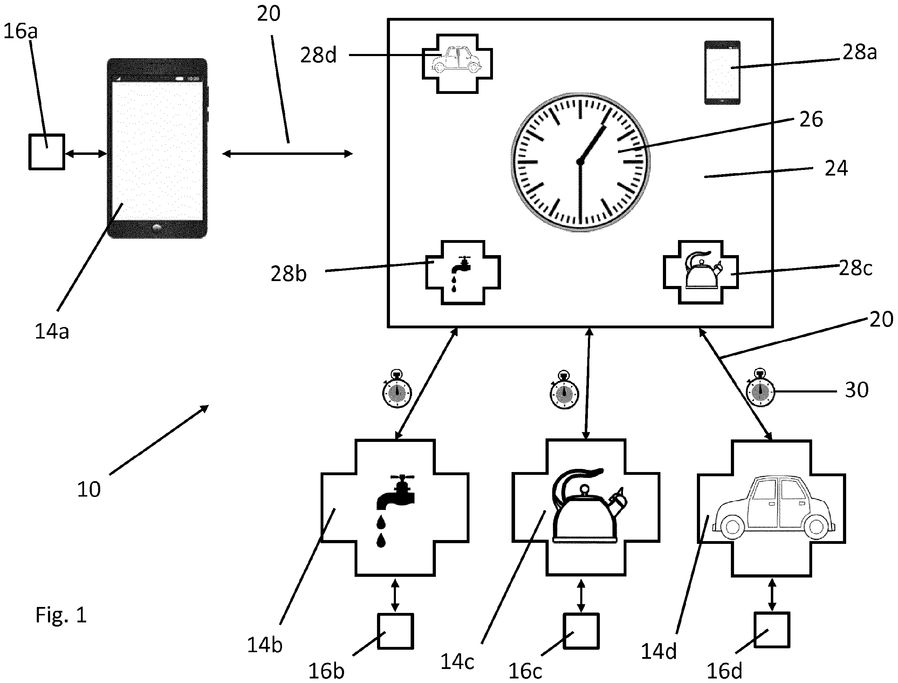

Figur 1 zeigt ein Kommunikationssystem 10 das mehrere Endgeräte 14a, b, c, d umfasst. Bevorzugt sind die Endgeräte 14a, b, c, d mobile Kommunikationseinheiten wie ein Smartphone 14a oder "intelligente Gegenstände" aus dem Bereich des "Internet of Things" (loT). Figur 1 zeigt eine intelligente Bewässerungseinheit 14b, eine intelligente Kücheneinheit 14c und ein intelligentes Fahrzeug 14d. Die Endgeräte 14a, b, c, d erfassen mittels Detektoren/Sensoren Informationen aus ihrer Umgebung, insbesondere Ortsinformationen 16 a, b, c, d, und können diese Informationen verarbeiten. Über ein drahtloses Kommunikationsnetzwerk 20 wird eine Kommunikationsumgebung mit einem Server 24, insbesondere einem Web-Server 24, ausgebildet. Dies ist in einer Art implementiert, die beispielsweise aus dem Mobilfunk bekannt ist, wenn mittels des Smartphones 14a eine Kommunikation zu einem sozialen Netzwerk oder einer anderen Anwendung zum Datenaustausch hergestellt wird. Die Anwendungsmöglichkeiten sind jedoch nicht auf den Mobilfunk beschränkt.

Ein weiteres Anwendungsgebiet ist für Situationen gegeben, in denen der Server 24 aufwändige Rechenleistung, gewöhnlich als Cloud-Computing bezeichnet, für die Endgeräte 14a, b, c, d erbringt und bereitstellt. In solchen Fällen kann sowohl der Server 24 hinsichtlich der zu erbringenden Rechenleistung überlastet sein als auch das Kommunikationsnetzwerk 20 hinsichtlich der Menge des Datenflusses. Auch eine Verbindung der Endgeräte 14a, b, c, d untereinander, insbesondere von mehreren Smartphones 14a, kann die Kapazität des verwendeten Kommunikationsnetzwerks 20 übersteigen, da die übermittelten Medieninhalte Datenmengen von einigen hundert Megabyte umfassen und in naher Zukunft noch größere Dimensionen annehmen werden. Dies führt in einigen Fällen zu unerwünschten Systemabstürzen. Nachteilig kann es deswegen vorkommen, dass beispielsweise ein Notruf nicht gesendet werden kann, weil sich andere Teilnehmer über das Kommunikationsnetzwerk 20 hochauflösende Katzenvideos senden.

Die Doppelpfeile des Kommunikationsnetzwerks 20 symbolisieren Datenaustauschprozesse in Form von Uplinks und Downlinks zwischen den Endgeräten 14a, b, c, d und dem Server 24. In den Server 24 ist eine Lastverteilungseinheit 26 integriert, die den Datenfluss über das Kommunikationsnetzwerk 20 zu den Endgeräten 14a, b, c, d misst, steuert und kontrolliert. Zusätzlich zu einer Auslastungsmessung des Kommunikationsnetzwerks 20 misst die Lastverteilungseinheit 26 auch eine Auslastung der CPU und der Speicherressourcen des Servers 24. Auf dem Server 24 werden die Anwendungen der Endgeräte 14a, b, c, d auf virtuellen Servern 28a, b, c, d verwaltet und bearbeitet, die jeweils einem Endgerät 14a, b, c, d zugeordnet sind.

Vermittels des Kommunikationsnetzwerks 20 tauschen die Endgeräte 14a, b, c, d Zusatzinformationen mit dem Server 24 aus, umfassend
1) Gerätetyp, Modell und Geräte-ID
   a) Telefon - Sony; Modell - XPERIA Z5; ID - xxx1
   b) Telefon - Apple; Modell - iPhone 6s; ID - xxx2
2) Dienstkategorie und ID
   a) Kategorie - intelligentes Fahrzeug 14d; ID - Ferndiagnose
      i) Dauer: 10 Minuten
   b) Kategorie - Soziales Netzwerk; ID - Datenaustausch
      i) Dauer: 2 Minuten
3) Ortsinformationen
   a) GPS Daten - 16a, b, c, d
4) Benutzer-ID
5) Mobilfunknetz

Die Liste an versendbaren Zusatzinformationen ist selbstredend erweiterbar und speziellen, insbesondere gewerblichen, Bedürfnissen anpassbar. Besonders bedeutsam im Kontext der Erfindung sind allerdings Zeitplandaten 30, welche mittels der Lastverteilungseinheit 26, insbesondere unter Berücksichtigung der Belastung des Kommunikationsnetzwerkes 20 berechnet und erstellt werden.

Der Lastverteilungseinheit 26 wird die Höhe des Datenflusses in dem Kommunikationsnetzwerk 20 und/oder der Auslastung der virtuellen Server 28a, b, c, d bereitgestellt. Die Lastverteilungseinheit 26 beugt einer Überlastung des Kommunikationssystems 10 vor, indem die Lastverteilungseinheit 26 eine Abarbeitung der Berechnungen und/oder der Datenaustauschprozesse durch eine zeitliche Entzerrung steuert. Dies wird wie folgt realisiert: Das Smartphone 14a sendet eine Anforderung, inklusive weiterer Parameter, für einen Lastprozess in dem Zeitraum von 1:00 Uhr bis 2:00 Uhr. Um die Überlastung zu vermeiden antwortet der Server 24, unter Berücksichtigung der Parameter, an das Smartphone 14a, den Lastprozess erneut im Zeitraum von 3:00 Uhr bis 4:00 Uhr anzufragen. Das Smartphone 14a fragt den Lastprozess zwischen 3:00 Uhr und 4:00 Uhr erneut an.

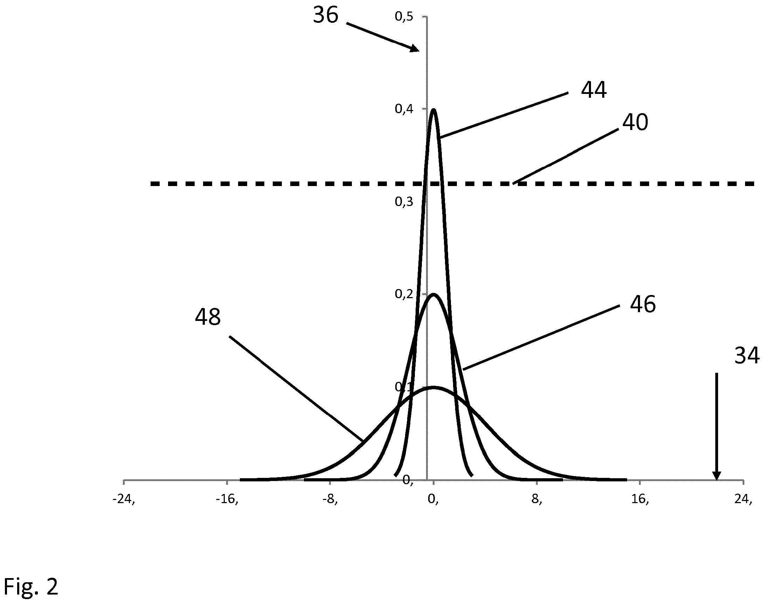

Das dahinterliegende Prinzip der zeitlichen Entzerrung und der hierdurch resultierenden Lastverteilung, oft auch als Load-Balancing bezeichnet, ist in Figur 2 gezeigt: Die X-Achse 34 repräsentiert einen Zeitstrahl 34 und die Y-Achse 36 ein Messung der Belastung der virtuellen Server 28 und/oder des Kommunikationssystems 10, insbesondere des Kommunikationsnetzwerks 20, und wird nachfolgend als Lastmaß 36 bezeichnet. Eine Überlastung des Kommunikationssystems 10 tritt bei einem Überschreiten des Schwellenwertes 40 durch Lastprozesse ein, welche den Wert des Lastmaßes 36 erhöhen. Die erste Kurve 44 überschreitet den Schwellenwert 40 und erreicht ein Maxima zum Zeitpunkt t = 0 s und führt daher zur Überlastung und im ungünstigsten Fall zum Ausfall des Kommunikationssystems 10. Der Fall, welcher durch die erste Kurve 44 beschrieben ist, entspricht einer Situation bei fehlenden oder deaktivierter Lastverteilungseinheit 26: Das Kommunikationssystems 10 versucht alle Anfragen, Berechnungen oder Datenaustauschprozesse in Echtzeit zu verarbeiten, was zu einer Systemüberlastung führen kann. Zur Einfachheit werden alle diese Vorgänge, welche zur Lastmaß 36 betragen als Lastprozesse bezeichnet. Die Gesamtlast setze sich hierbei aus N einzelnen Lastprozessen zusammen.

Die aktivierte Lastverteilungseinheit 26 entzerrt die N-Lastprozesse entlang des Zeitstrahls in der Art einer zweiten Kurve 46 oder einer dritten Kurve 48, sodass das Maximum der Kurven 46, 48 stets unter dem Schwellenwert 40 liegt und das Kommunikationssystem 10 nicht überlastet wird. Hierbei sind i. allg. für verschiedene Kommunikationssysteme 10 jeweils spezifische Schwellenwerte ausgebildet in die die speziellen Ausprägungen des jeweiligen Kommunikationssystems 10 eingehen. Die Steuerung der einzelnen Lastprozesse durch die Lastverteilungseinheit 26 kann verschieden stark ausgestaltbar sein. In Figur 2 dämpft die dritte Kurve 48 die Lastprozesse stärker als die zweite Kurve 46. Die Dämpfung der Lastprozesse wird, wie vorstehend kurz erwähnt, durch die zeitliche Entzerrung bewerkstelligt. Die zeitliche Entzerrung basiert auf dem Prinzip, dass nicht alle Lastprozesse in quasi EchtZeit bearbeitet werden, sondern dass die Lastverteilungseinheit 26 einen Zeitplan erstellt, worin ausgewählten Lastprozessen ein späteres, aber wohldefiniertes, Zeitfenster zur Bearbeitung zugeordnet ist, wobei diese Information mittels der Zeitplandaten 30 an die Endgeräte 14a, b, c, d übermittelt wird. Die Endgeräte 14a, b, c, d senden in dem späteren erneut eine Bearbeitungsanfrage. Die Gesamtzahl N der Lastprozesse bleibt hierbei erhalten.

Eine Erstellung dieses Zeitplans kann mittels Randomisierungs-Algorithmen oder Hierarchiebasierten-Algorithmen erfolgen:
Randomisierungs-Algorithmen: Hierbei wählt die Lastverteilungseinheit 26 aus den zu bearbeitenden Lastprozessen eine gewisse Anzahl aus und verteilt diese auf dem Zeitplan zufallsmäßig auf einen späteren Zeitraum. Es muss hierbei allerdings sichergestellt werden, dass die Gesamtzahl N der Lastprozesse erhalten bleibt, sodass jede Anfrage, wenn auch verzögert, bearbeitet wird. Zu Illustrationszwecken wird angenommen, dass fünf verschiedene Lastprozesse A, B, C, D und E quasi gleichzeitig in dem Kommunikationssystem 10 bearbeitet werden sollen. Zeitgleich kann das beispielhafte Kommunikationssystem 10 jedoch nur zwei Lastprozesse bearbeiten. Um eine Überlastung zu vermeiden, erstellt der Randomisierungs-Algorithmus der Lastverteilungseinheit 26 einen Zeitplan, welcher vorsieht, dass die Lastprozesse B und E, zufällig ausgewählt, sofort bearbeitet werden und verteilt die übrigen Prozesse gleichmäßig oder zufallsverteilt auf eine vorher definierte Abarbeitungszeitspanne. Je länger diese vorher definierte Abarbeitungszeitspanne ist, desto größer ist die Dämpfung. Vorliegend ist die Abarbeitungszeitspanne für die dritte Kurve 48 länger festgelegt als für die zweite Kurve 46.

Hierarchiebasierten-Algorithmen: Hierbei analysiert die Lastverteilungseinheit 26 vor der Erstellung des Zeitplans 58a, b die Zusatzinformationen und kann dann nach vorher festgelegten Regeln auswählen, welche Lastprozesse bevorzugt zeitnah ausgeführt werden sollen oder welche Lastprozesse hinten anstellbar sind. Notfallrufnummern oder wichtige Systemüberwachungsparameter bekommen eine hohen Priorisierungswert und werden bevorzugt zeitnah ausgeführt, wobei zum Beispiel Update-Prozesse der Endgeräte 14a, b, c, d bevorzugt hinten angestellt werden und auch problemlos über Nacht, zu Zeiten einer geringen Systembelastung, ausführbar sind. Alternativ können auch Benutzer bestimmter Smartphone 14a Hersteller bevorzugt werden, da diese entsprechende Verträge mit den Betreibern des Kommunikationssystems 10 abgeschlossen haben.

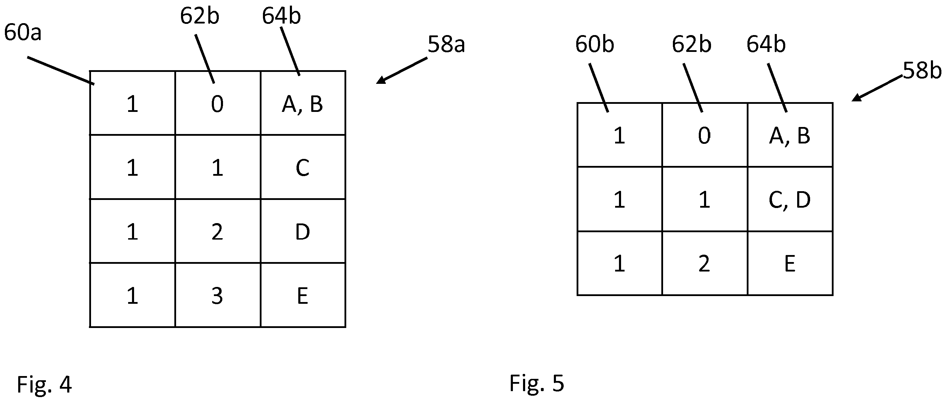

Die Figuren 4 und 5 illustrieren beispielhaft einen Zeitplan 58a für die dritte Kurve 48 und einen weiteren Zeitplan 58b für die zweite Kurve 46. In den Spalten 60a, b ist die zeitliche Körnung der Zeitpläne angegeben. Vorliegend ist das kleinste Zeitintervall als eine Minute ausgebildet. Hieraus folgt, dass die gesamte Abarbeitungszeitspanne des Zeitplans 58a vier Minuten ist und die Abarbeitungszeitspanne des Zeitplans 58b drei Minuten beträgt. Selbstverständlich können, insbesondere die Zeitangaben, eine Vielzahl verschiedener Werte annehmen, sodass die vorliegenden Beispiele nicht als Begrenzung der Erfindung zu sehen sind. Die Spalten 62a, b geben die jeweils verstrichene Zeit an und die Spalten 64a, b die Lastprozesse A, B, C, D, E, die in den jeweiligen Zeiteinheiten von dem Kommunikationssystem 10 bearbeitet werden sollen. Da die gesamte Abarbeitungszeitspanne der zweiten Kurve 46 (Figur 5) länger ist als für die dritte Kurve 48 (Figur 48) werden in der zweiten Zeile der Spalte 64b mehr Lastprozesse bearbeitet als in der korrespondierenden Zelle in Figur 4, woraus folgt, dass die Dämpfung geringer ausfällt. Die Kontrolle und die Steuerung erfolgt hierbei dadurch, dass jedes Endgerät 14a, b, c, d die jeweils relevanten Zeitplandaten 30 aus dem Zeitplan 58 übermittelt bekommt. Beispielsweise erhält das Smartphone 14a die Informationen, einen gewünschten Lastprozess nach fünf Minuten erneut anzufragen. Bevorzugt sind die benötigten Kapazitäten des Lastprozesses dann auch für das Smartphone 14a reserviert und verfügbar.

Die Kurven 46; 48 weisen hierbei eine Glockenkurvenform auf. Die konkrete Form der Kurven wird insbesondere durch die konkrete Ausgestaltung der Algorithmen ausgebildet, welche der Erstellung der Zeitpläne 58a, b zu Grunde liegen. Eine gleichmäßige Verteilung der einzelnen Lastprozesse auf die gesamte Abarbeitungszeitspanne hat beispielsweise eher eine rechteckige Form der Kurven 46, 48 zur Folge und ein Zufallsalgorithmus eher einen glockenkurvenförmigen Verlauf. Diese Algorithmen müssen allerdings in einer Art flexibel sein, dass sie Lastprozesse berücksichtigen, die zeitlich nach der Erstellung des Zeitplans 30 und vor dessen finaler Abarbeitung neu hinzukommen.

Eine Variante der Algorithmen umfasst eine Schätzung wie lange die Abarbeitung eines jeden Lastprozesses dauert, sodass ein Lastprozess möglich nahtlos dem vorherigen Lastprozess folgen kann und die Lastprozesse zudem möglichst gleichmäßig verteilt werden können. In diese Berechnung gehen auch Charakteristika des bereitgestellten Kommunikationsnetzwerks 20 ein. Insbesondere im Mobilfunk surfen viele Benutzer mit unterschiedlichen Übertragungsraten, die als Parameter in den Algorithmen eingehen. Bevorzugt weist ein derart erzeugter Zeitplan flexible Zeiteinheiten in den Spalten 60a, b auf.

Figur 2 zeigt, dass die Lastverteilungseinheit 26 für die Dämpfungsstufe der Kurve 48 schon zum Zeitpunkt von circa -15 Minuten mit der Steuerung durch die Erstellung eines Zeitplans 58a, b beginnt, obwohl das Maximum des Lastmaßes 36 erst zum Zeitpunkt 0 Minuten auftritt. Die Lastverteilungseinheit 26 fängt also schon zu einem Zeitpunkt mit der Steuerung an, bevor sie durch ihre intern bereitgestellten Daten wissen kann, dass das Lastmaß 36 in den Bereich des Schwellenwertes 40 gelangt. Dieses Verfahren wird angewendet, wenn durch eine, zu einem früheren Zeitpunkt erfolgte, Analyse des Datenflusses des Kommunikationssystems 10 festgestellt wird, dass bevorzugt zu gewissen Zeitpunkten der Schwellenwert 40 erreicht bzw. überschritten wird. So ist bekannt, dass Kommunikationsnetze 10 regelmäßig am Übergang von Sylvester zu Neujahr zusammenbrechen. Diese Information kann in den Algorithmus in einer Art berücksichtig werden, dass jedes Jahr am 31. Dezember um 23:45 Uhr die Lastverteilungseinheit 26 mit einer vorher festgelegten Dämpfungsstufe aktiviert wird.

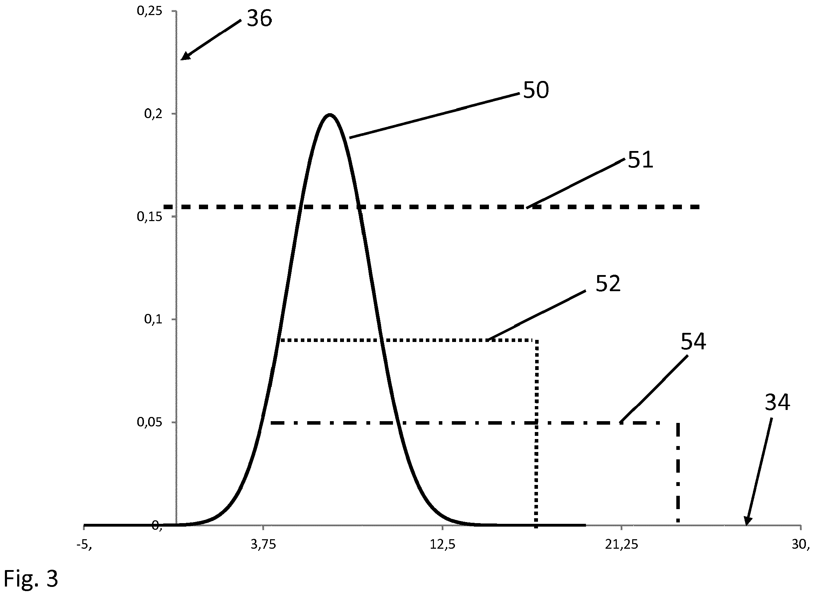

Zusätzlich wird es aber immer auch Zeitpunkte geben in denen der Schwellenwert 40 des Lastmaßes 36 durch unvorhersehbarer Ereignisse überschritten wird. Dies ist beispielsweise bei Unglücksmeldungen oder Sportereignissen der Fall. Um in solchen Fällen eine Überlastung des Kommunikationssystems 10 zu verhindern, reagiert die Lastverteilungseinheit 26 dynamisch auf einen Anstieg der Lastprozesse, um den Endgeräten 14a, b, c, d Zeitplandaten 30 zu senden, die Zeitpunkte für eine erneute Anfrage der jeweiligen Lastprozesse durch das entsprechende Endgerät 14a, b, c, d umfassen. Figur 3 zeigt eine derartige Steuerung durch die Lastverteilungseinheit 26. In der dynamischen Regulierungsoption beginnt die Regulierung erst ab dem Zeitpunkt t = 0 Sekunden. Hierbei stellt die vierte Kurve 50 einen Verlauf der Lastprozesse ohne Steuerung durch die Lastverteilungseinheit 26 dar, welche einen weiteren Schwellenwert 51 überschreitet und dadurch zu einer Überlastung des Kommunikationssystems 10 führen würde.

Eine Überwachung der Lastprozesse durch die Lastverteilungseinheit 26 umfasst, dass die Lastverteilungseinheit 26 die Lastprozesse entweder nach dem Randomisierungs-Algorithmus oder dem Hierarchiebasierten-Algorithmus steuert, falls bestimmte, vorher definierte, Grenzwerte des Lastmaßes 36 überschritten werden. Eine Auswahl über die Stärke der Dämpfung kann beispielsweise durch eine Analyse weitere Kriterien getroffen werden, sodass wahlweise die Kurven 52, 54 für den Verlauf der Lastprozesse folgen. Je größer die Steigung der Kurve ist, desto größer ist die Wahrscheinlichkeit, dass ein höheres Maximum der Kurve 50 folgen wird. Dies ist ein mögliches Kriterium, das zur Wahl der Dämpfungsstufe verwendbar ist.

Das beschriebene Verfahren bewirkt also, dass das Kommunikationssystem 10 nicht überlastet wird, indem die Lastprozesse zeitlich entzerrt werden. Zudem beugt es einer Überkapazität in Bezug auf das Kommunikationsnetzwerk 20 und der Leistung des Servers 24 vor, da ohne das Verfahren die Kapazitäten vergrößert werden müssten, um bei maximalem Lastmaß 36 keine Überlastung des Kommunikationssystems 10 zu erleiden. Zu Zeiten einer normalen Auslastung des Kommunikationssystems 10 durch die Lastprozesse wären dann allerdings viele Ressourcen des Kommunikationssystems 10 ungenutzt.

## Patentansprüche

1. Verfahren zur Lastverteilung zwischen
einem Server (24) und
einem Endgerät (14a, b, c, d),
wobei der Server (24) über ein Kommunikationsnetzwerk (20), nämlich dem Internet, Daten mit dem Endgerät (14a, b, c, d) austauscht,
wobei eine Lastverteilungseinheit (26) den Datenverkehr zwischen dem Server (20) und dem Endgerät (14a, b, c, d) kontrolliert, wobei das Endgerät (14a, b, c, d) zu einem bestimmten Zeitpunkt einen Lastprozess, wie das Herunterladen von Daten im Rahmen eines Download oder das Erbringen einer Rechenleistung, bei dem Server (24) anfragt,
wobei der Lastverteilungseinheit Daten bezüglich der Ressourcenauslastung des Kommunikationsnetzwerkes und des Servers bereit gestellt werden,
wobei die Lastverteilungseinheit die Daten analysiert und eine mögliche Überlastung des Kommunikationsnetzwerkes und des Servers ermittelt,
wobei die Lastverteilungseinheit (26) zur Entzerrung der Lastprozesse dem Endgerät (14a, b, c, d) eine Information sendet, in der das Endgerät aufgefordert wird, die Anfrage in einem späteren Zeitfenster zu wiederholen,
und wobei in diesem späteren Zeitfenster Ressourcen des Servers und des Kommunikationsnetzwerkes für den Lastprozess freigehalten werden und wobei das Endgerät (14a, b, c, d) seine Anfrage in dem späteren Zeitfenster erneut sendet, wobei der Lastprozess in dem späteren Zeitfenster ausgeführt wird, wenn die Lastverteilungseinheit (26) diesbezüglich eine Freigabe erteilt,
wobei sich der Prozess der erneuten Anfrage auf ein weiteres in der Zukunft liegendes Zeitfenster so lange wiederholt, bis die Lastverteilungseinheit die Freigabe erteilt.

2. Verfahren nach Anspruch 1, wobei das Endgerät (14a, b, c, d) mittels der Anfrage des Lastprozesses (28a, b, c, d) zusätzliche Parameter an den Server (24) sendet, wobei die zusätzlichen Parameter Geräte- und Modelltypen Daten, Service-Kategorie und Service-ID Daten, Geräte-ID und Benutzer-ID Daten umfassen.

3. Verfahren nach Anspruch 2, wobei die zusätzlichen Parameter von der Lastverteilungseinheit (26) zusammen mit Betriebsdaten des Servers (24), wie einer CPU-Auslastung oder einer zeitliche Bandbreitenausnutzung, zur Verschiebung des angefragten Lastprozesses (28a, b, c, d) durch das Endgerät (14a, b, c, d) in das spätere Zeitfenster berücksichtigt werden.

4. Verfahren nach einem der Ansprüche 1 bis 3, wobei eine Entscheidung über das Verschieben der Anfrage in das spätere Zeitfenster durch einen vorab definierten Computeralgorithmus oder durch einen Systemadministrator getroffen wird.

5. Verfahren nach einem der Ansprüche 1 bis 4, wobei das Zeitfenster flexible Zeitintervalle aufweist, die beispielsweise einen Tag, 1 Stunde, 15 Minuten, 5 Minuten oder 1 Minute betragen.

6. Verfahren nach einem der Ansprüche 1 bis 5, wobei der Server (24) die Lastverteilungseinheit (26) umfasst.

7. Verfahren nach einem der Ansprüche 1 bis 6, wobei die Lastverteilungseinheit (26) einen Zeitplan generiert, um den Datenverkehr zu optimieren.

8. Ein Datenverkehr-Kontrollsystem, umfassend
einen Server (24) mit einer Lastverteilungseinheit (26) und
einem Endgerät (14a, b, c, d), wobei der Server (20) und das Endgerät (14a, b, c, d), über ein Kommunikationsnetzwerk (20) verbunden sind, ausgestaltet, um ein Verfahren nach einem der Ansprüche 1 bis 7 auszuführen, und wobei die Lastverteilungseinheit eingerichtet ist, in dem späteren Zeitfenster Ressourcen des Servers und des Kommunikationsnetzwerkes für den Lastprozess freizuhalten.

## Claims

1. Method for load distribution between
a server (24) and
a terminal (14a, b, c, d),
wherein the server (24) exchanges data with the terminal (14a, b, c, d) via a communication network (20), namely the Internet,
wherein a load distribution unit (26) controls the data traffic between the server (20) and the terminal (14a, b, c, d)
wherein the terminal (14a, b, c, d) queries the server (24) at a specific point in time of a loading process, like the downloading of data in the context of a download or providing computing power,
wherein data regarding the resource utilization of the communication network and of the server are provided to the load distribution unit,
wherein the load distribution unit analyzes the data and determines a potential overload of the communication network and of the server,
wherein the load distribution unit (26) transmits a piece of information for equalizing the loading process to the terminal (14a, b, c, d), in which piece of information the terminal is prompted to repeat the request in a later time window,
and wherein resources of the server and of the communication network are reserved for the loading process in this later time window, and
wherein the terminal (14a, b, c, d) transmits its renewed request in the later time window,
wherein the loading process is executed in the later time window if the load distribution unit (26) grants a release with respect to this,
wherein the process of the renewed request is repeated at another time window lying in the future until the load distribution unit grants the release.

2. Method according to claim 1, wherein the terminal (14a, b, c, d) transmits additional parameters to the server (24) by means of the request for the loading process (28a, b, c, d), wherein the additional parameters comprise device and model type data, service category and service ID data, device ID and user ID data.

3. The method according to claim 2, wherein the additional parameters are taken into consideration by the load distribution unit (26) together with operating data of the server (24), like a CPU utilization or a temporary bandwidth utilization, for displacing the loading process (28a, b, c, d) requested by the terminal (14a, b, c, d) into the later time window.

4. Method according to one of claims 1 to 3, wherein a decision about the displacement of the request into the later time window is carried out by a previously defined computer algorithm or by a system administrator.

5. Method according to one of claims 1 to 4, wherein the time window has flexible time intervals, which are, for example, one day, 1 hour, 15 minutes, 5 minutes, or 1 minute.

6. Method according to one of claims 1 to 5, wherein the server (24) comprises the load distribution unit (26).

7. Method according to one of claims 1 to 6, wherein the load distribution unit (26) generates a schedule in order to optimize the data traffic.

8. A data traffic control system, comprising
a server (24) with a load distribution unit (26) and
a terminal (14a, b, c, d), wherein the server (20) and the terminal (14a, b, c, d) are connected via a communication network (20), and the data traffic control system is configured to carry out a method according to one of claims 1 to 7, and wherein the load distribution unit is equipped to reserve resources of the server and of the communication network for the loading process in the later time window.

## Revendications

1. Procédé de répartition de charge entre
un serveur (24) et
un appareil terminal (14a, b, c, d),
dans lequel le serveur (24) échange par l'intermédiaire d'un réseau de communication (20), à savoir Internet, des données avec l'appareil terminal (14a, b, c, d), une unité de répartition de charge (26) contrôle le trafic de données entre le serveur (20) et l'appareil terminal (14a, b, c, d),
l'appareil terminal (14a, b, c, d) demande à un certain moment un processus de charge, comme le téléchargement de données dans le cadre d'un téléchargement ou la fourniture d'une prestation de calcul auprès du serveur (24),
des données concernant la charge en ressources du réseau de communication et du serveur sont mises à la disposition de l'unité de répartition de charge, l'unité de répartition de charge analyse les données et détermine une surcharge éventuelle du réseau de communication et du serveur,
l'unité de répartition de charge (26), pour l'égalisation des processus de charge, envoie à l'appareil terminal (14a, b, c, d) une information dans laquelle il est demandé à l'appareil terminal de répéter la demande dans une fenêtre temporelle ultérieure, et, dans cette fenêtre temporelle ultérieure, des ressources du serveur et du réseau de communication sont gardés libres pour le processus de charge et l'appareil terminal (14a, b, c, d) renvoie sa demande dans la fenêtre temporelle ultérieure,
le processus de charge est réalisé dans la fenêtre temporelle ultérieure lorsque l'unité de répartition de charge (26) communique une validation à ce sujet,
le processus de nouvelle demande d'une autre fenêtre temporelle se situant dans l'avenir est répété jusqu'à ce que l'unité de répartition de charge communique la validation.

2. Procédé selon la revendication 1, dans lequel l'appareil terminal (14a, b, c, d) envoie au moyen de la demande de processus de charge (28a, b, c, d) des paramètres supplémentaires au serveur (24), les paramètres supplémentaires comprenant des données concernant les types d'appareils et de modèles, la catégorie de services et des données d'identification de services, des identifiants d'appareils et des données d'identification d'utilisateurs.

3. Procédé selon la revendication 2, dans lequel les paramètres supplémentaires sont pris en compte par l'unité de répartition de charge (26) en même temps que des données de fonctionnement du serveur (24), comme une charge de CPU ou une utilisation maximale temporaire de largeur de bande, pour décaler le processus de charge demandé (28a, b, c, d) par l'appareil terminal (14a, b, c, d) dans la fenêtre temporelle ultérieure.

4. Procédé selon une des revendications 1 à 3, dans lequel une décision sur le décalage de la demande dans une fenêtre temporelle ultérieure est prise par un algorithme informatique défini préalablement ou par un administrateur du système.

5. Procédé selon une des revendications 1 à 4, dans lequel la fenêtre temporelle présente des intervalles temporels flexibles, qui s'élèvent par exemple à un jour, 1 heure, 15 minutes, 5 minutes ou 1 minute.

6. Procédé selon une des revendications 1 à 5, dans lequel le serveur (24) comprend l'unité de répartition de charge (26).

7. Procédé selon une des revendications 1 à 6, dans lequel l'unité de répartition de charge (26) génère un planning pour optimiser le trafic de données.

8. Système de contrôle trafic de données, comprenant
un serveur (24) doté d'une unité de répartition de charge (26) et
un appareil terminal (14a, b, c, d), le serveur (20) et l'appareil terminal (14a, b, c, d) étant connectés par un réseau de communication (20), conçu pour exécuter un procédé selon une des revendications 1 à 7, et l'unité de répartition de charge étant conçue pour garder libres, dans la fenêtre temporelle ultérieure, des ressources du serveur et du réseau de communication pour le processus de charge.
